# EUROPÄISCHE PATENTSCHRIFT

(11) **EP 1 478 453 B1**
(45) Veröffentlichungstag und Bekanntmachung des Hinweises auf die Patenterteilung: **10.05.2006**
(21) Anmeldenummer: 02716817.8
(22) Anmeldetag: 28.02.2002
(51) Int. Cl.: B01F 5/04, B01J 19/26, F23C 7/00, F23D 11/38, C01B 3/36, F23D 11/40, C01B 3/34, H01M 8/06, B01F 5/06

(54) **SYSTEME ZUM UMSETZEN VON BRENNSTOFF UND LUFT ZU REFORMAT**
SYSTEMS FOR REACTING FUEL AND AIR TO A REFORMATE
SYSTEME POUR TRANSFORMER UN COMBUSTIBLE ET DE L'AIR EN UN REFORMAT

(43) Veröffentlichungstag der Anmeldung: 24.11.2004
(73) Patentinhaber: WEBASTO THERMOSYSTEME GmbH, D-17033 Neubrandenburg (DE)
(72) Erfinder: GALTZ, Rudiger, 82166 Grafelfing (DE); HINTERMAIER, Konrad C/O Herkuma GmbH, 85386 Eching (DE)
(74) Vertreter: Schumacher & Willsau
(86) Internationale Anmeldenummer: PCT/EP2002/002192
(87) Internationale Veröffentlichungsnummer: WO 2003/072234

(56) Entgegenhaltungen:
- EP-A- 0 777 084
- WO-A-01/71251
- DE-A- 2 433 811
- GB-A- 739 699
- US-A- 4 396 372
- US-A- 4 425 159
- US-A- 5 899 075
- US-A- 5 997 596
- PATENT ABSTRACTS OF JAPAN vol. 010, no. 287 (C-375), 30. September 1986 (1986-09-30) & JP 61 106401 A (FUJI ELECTRIC CO LTD), 24. Mai 1986 (1986-05-24)
- PATENT ABSTRACTS OF JAPAN vol. 1996, no. 11, 29. November 1996 (1996-11-29) & JP 08 192040 A (FUJI ELECTRIC CO LTD), 30. Juli 1996 (1996-07-30)

## Beschreibung

Die Erfindung betrifft ein System zum Umsetzen von Brennstoff und Luft zu Reformat mit einem Reformer, der einen Reaktionsraum aufweist, einer Düse zum Zuführen eines Brennstoff/Luft-Gemisches zu dem Reaktionsraum, mindestens einer Zufuhrleitung zum Zuführen von Brennstoff in die Düse und mindestens einem Eintrittskanal zum Zuführen von Luft in die Düse.

Gattungsgemäße Systeme dienen der Umwandlung von chemischer Energie in elektrische Energie. Zu diesem Zweck werden dem Reformer Brennstoff und Luft, vorzugsweise in Form eines Brennstoff/Luft-Gemisches, zugeführt. In dem Reformer erfolgt dann eine Umsetzung des Brennstoffes mit dem Luftsauerstoff, wobei vorzugsweise das Verfahren der partiellen Oxidation durchgeführt wird.

Das so erzeugte Reformat wird dann einer Brennstoffzelle beziehungsweise einem Brennstoffzellenstack zugeführt, wobei durch die kontrollierte Umsetzung von Wasserstoff, als Bestandteil des Reformats, und Sauerstoff elektrische Energie freigesetzt wird.

Der Reformer kann, wie bereits erwähnt, so ausgelegt sein, dass das Verfahren der partiellen Oxidation durchgeführt wird, um Reformat zu erzeugen. In diesem Fall ist es bei der Verwendung von Diesel als Brennstoff besonders nützlich, vor der partiellen Oxidation Vorreaktionen durchzuführen. Auf diese Weise können mit "kalter Flamme" langkettige Dieselmoleküle in kürzerkettige Moleküle umgesetzt werden, was letztlich den Reformerbetrieb begünstigt. Allgemein wird der Reaktionszone des Reformers ein Gasgemisch zugeführt, welches zu H₂ und CO umgesetzt wird. Ein weiterer Bestandteil des Reformats sind N₂ aus der Luft sowie, in Abhängigkeit von der Luftzahl und der Temperatur, gegebenenfalls CO₂, H₂O und CH₄. Im Normalbetrieb wird der Brennstoffmassenstrom entsprechend der angeforderten Leistung geregelt, und der Luftmassenstrom wird auf eine Luftzahl im Bereich von λ = 0,4 geregelt. Die Reformierungsreaktion kann durch unterschiedliche Sensoren, beispielsweise Temperatursensoren und Gassensoren, überwacht werden.

Neben dem Verfahren der partiellen Oxidation ist es ebenfalls möglich, eine autotherme Reformierung durchzuführen. Das Verfahren der partiellen Oxidation wird im Gegensatz zur autothermen Reformierung dadurch herbeigeführt, dass Sauerstoff unterstöchiometrisch zugeführt wird. Beispielsweise hat das Gemisch eine Luftzahl von λ = 0,4. Die partielle Oxidation ist exotherm, so dass es in problematischer Weise zu einer unerwünschten Aufheizung des Reformers kommen kann. Ferner neigt die partielle Oxidation zu einer verstärkten Rußbildung. Zur Vermeidung der Rußbildung kann die Luftzahl λ kleiner gewählt werden. Dies wird so erreicht, dass ein Teil des für die Oxidation verwendeten Sauerstoffs durch Wasserdampf bereitgestellt wird. Da die Oxidation mit Wasserdampf endotherm verläuft, ist es möglich, das Verhältnis zwischen Brennstoff, Sauerstoff und Wasserdampf so einzustellen, dass insgesamt weder Wärme freigesetzt noch Wärme verbraucht wird. Die so erreichte autotherme Reformierung beseitigt daher die Probleme der Rußbildung und einer unerwünschten Überhitzung des Reformers.

Ebenfalls ist es möglich, dass im Anschluss an die Oxidation in dem Reformer weitere Schritte der Gasbehandlung erfolgen, wobei insbesondere der partiellen Oxidation eine Metanisierung nachgeschaltet sein kann.

Ein gängiges Brennstoffzellensystem ist beispielsweise ein PEM-System ("proton exchange membrane"), welches typischerweise bei Betriebstemperaturen zwischen Raumtemperatur und etwa 100 °C betrieben werden kann. Aufgrund der niedrigen Betriebstemperaturen wird dieser Brennstoffzellentyp häufig für mobile Anwendungen genutzt, beispielsweise in Kraftfahrzeugen.

Weiterhin sind Hochtemperaturbrennstoffzellen bekannt, sogenannte SOFC-Systeme ("solid oxide fuel cell"). Diese Systeme arbeiten beispielsweise im Temperaturbereich von zirka 800 °C, wobei ein Feststoffelektrolyt ("solid oxide") in der Lage ist, den Transport von Sauerstoffionen zu übernehmen. Der Vorteil von derartigen Hochtemperaturbrennstoffzellen gegenüber PEM-Systemen besteht insbesondere in der Robustheit gegenüber mechanischen und chemischen Belastungen.

Als Anwendungsgebiet für Brennstoffzellen in Verbindung mit den gattungsgemäßen Systemen kommen neben stationären Anwendungen insbesondere Anwendungen im Kraftfahrzeugbereich in Frage, beispielsweise als "auxiliary power unit" (APU).

Für einen zuverlässigen Betrieb des Reformers ist es wichtig, den Brennstoff beziehungsweise das Brennstoff/Luft-Gemisch in geeigneter Weise dem Reaktionsraum des Reformers zuzuführen. Beispielsweise sind eine gute Vermischung von Brennstoff und Luft und eine gute Verteilung des Brennstoff/Luft-Gemisches in dem Reaktionsraum des Reformers für die Funktion des Reformers vorteilhaft. Im Rahmen der vorliegenden Offenbarung ist stets von einem Brennstoff/Luft-Gemisch die Rede, wenn die in den Reaktionsraum des Reformers einzubringenden beziehungsweise eingebrachten Substanzen angesprochen werden. Die eingebrachten Substanzen sind jedoch nicht auf ein Gemisch aus Brennstoff und Luft beschränkt. Vielmehr können auch andere Substanzen zusätzlich eingebracht werden, beispielsweise Wasserdampf im Falle der autothermen Reformierung. Insofern ist der Begriff Brennstoff/Luft-Gemisch in dieser allgemeineren Form zu verstehen.

Der Erfindung liegt die Aufgabe zugrunde, ein System zum Umsetzen von Brennstoff und Luft zu Reformat zur Verfügung zu stellen, welches vorteilhafte Eigenschaften im Hinblick auf das Einbringen des Brennstoff/Luft-Gemisches in einen Reaktionsraum eines Reformers aufweist.

Diese Aufgabe wird mit den Merkmalen der unabhängigen Ansprüche gelöst.

Vorteilhafte Ausführungsformen und Weiterbildungen der Erfindung sind in den abhängigen Ansprüchen angegeben.

Die Erfindung baut auf dem gattungsgemäßen System dadurch auf, dass die Düse eine Drallkammer aufweist, in die die mindestens eine Zufuhrleitung zum Zuführen von Brennstoff im wesentlichen axial zentral und der mindestens eine Eintrittskanal im wesentlichen tangential einmünden und aus der ein Düsenaustritt ausmündet, und dass die Drallkammer einen sich verengenden Spiralkanal, in den der Eintrittskanal für das gasförmige Medium mündet, und einen sich axial in Richtung zum Düsenaustritt daran anschließenden Spaltraum umfasst, in den die Zufuhrleitung zum Zuführen von Brennstoff einmündet und aus dem der Düsenaustritt ausmündet. Die erfindungsgemäße Anordnung sieht somit vor, dass in den Ringraum der Eintrittskanal für die Luft beziehungsweise allgemein das gasförmige Medium einmündet, während die Zufuhr für den Brennstoff, das heißt allgemein für das flüssige Medium, in den Spaltraum einmündet. Dieser mündet seinerseits in den Düsenaustritt aus, und er geht über seinen Umfangsrand in den Ringraum über, beziehungsweise er steht mit diesem in Verbindung. Der Ringraum erfüllt damit die Funktion einer Wirbelkammer, in welche das gasförmige Medium zumindest im Wesentlichen tangential in einer relativ großen Entfernung von der Längsmittenachse der Drallkammer über eine relativ große Bohrung eingeleitet wird. Aus der Wirbelkammer beziehungsweise dem Spiralkanal wird das gasförmige Medium in eine Kammer mit geringer axialer Ausdehnung geleitet. Diese Kammer wird vorliegend als Spaltraum bezeichnet. Die geringe axiale Ausdehnung ist gewählt, um einen möglichst geringen Druckverlust gewährleisten zu können. Ein wesentlicher Aspekt des erfindungsgemäßen Systems, bei dem eine aus einem Spiralkanal und einem Spaltraum zusammengesetzte Drallkammer vorgesehen ist, betrifft die Erhaltung des Dralls mit dem Ziel, das gasförmige Medium mit geringer Geschwindigkeit in den Ringraum einzuleiten, in diesem zu beschleunigen und mit hoher Geschwindigkeit in den Spaltraum einzuleiten. Hierdurch wird an dessen axialem Austritt, der vorliegend auch als Düsenaustritt bezeichnet wird, ein Unterdruck derart bereitgestellt, dass das den Spaltraum axial durchsetzende flüssige Medium vernebelt wird. Die strömungstechnische Auslegung des Spiralkanals kann dabei nach üblichen Gesichtspunkten der Auslegung von Leitapparaten für Radiallüfter erfolgen, die im Stand der Technik gut bekannt sind.

Das erfindungsgemäße System ist besonders dadurch vorteilhaft ausgebildet, dass eine Stirnwandung des Spiralkanals, das heißt die Innenwandung oder die Außenwandung, kreiszylindrisch gebildet ist und die andere Stirnwandung des Spiralkanals spiralförmig gebildet ist. Auf diese Weise kann der Spiralkanal zweiteilig aus einem mit dem Spiralverlauf versehenen Frästeil und einem in dieses zentral eingesetzten Zylinderteil hergestellt werden.

Es ist besonders bevorzugt, dass der Eintrittskanal für das flüssige Medium koaxial zum Düsenaustritt angeordnet ist.

Insbesondere wird somit das flüssige Medium fluchtend mit der Längsmittenachse der Drallkammer über ein kleine Bohrung zentral in den Spaltraum eingespeist und auf der dieser Bohrung direkt gegenüberliegenden Seite des Spaltraums über eine weitere größere Bohrung ausgeleitet; diese bildet den Düsenaustritt.

In diesem Zusammenhang ist es besonders zu bevorzugen, dass der Düsenaustritt durch eine Düsenbohrung in einer Abschlussplatte des Spaltraums der Drallkammer festgelegt ist.

Der Rand der Düsenaustrittsbohrung auf Seiten des Spaltraums kann verrundet sein, um den benötigten Druck zur Förderung des Gemisches aus flüssigem und gasförmigem Medium in den Düsenaustritt zu minimieren. Es ist in einer weiteren vorteilhaften Ausführungsform möglich, dass dieser Rand zum selben Zweck angeschrägt oder auch scharfkantig gebildet sein kann.

Das erfindungsgemäße System ist in besonders vorteilhafter Weise so ausgebildet, dass die axiale Länge des Düsenaustritts 0,05 mm - 1 mm, insbesondere 0,1 mm - 0,5 mm beträgt.

Es ist besonders zu bevorzugen, dass Mittel vorgesehen sind, so dass in den Reaktionsraum Sekundärluft einströmen kann. Die durch die Düse in den Reaktionsraum eintretende Luft, das heißt die im Brennstoff/Luft-Gemisch vorhandene Luft kann in diesem Zusammenhang als Primärluft bezeichnet werden. Die Sekundärluft wird in vorteilhafter Weise durch Sekundärluftbohrungen im Gehäuse des Reaktionsraums gefördert. Die Aufteilung der Luft in Primärluft und Sekundärluft kann nützlich sein, um am Austritt der Düse ein fettes, zündwilliges Gemisch bereitzustellen. Dies ist insbesondere beim Startvorgang des Systems nützlich, da hier der Reformer in vorteilhafter Weise nach Art eines Brenners arbeitet.

Die Erfindung ist in vorteilhafter Weise dadurch weitergebildet, dass die Düse Mittel zum Halten eines Glühstifts aufweist. Die Positionierung des Glühstiftes bezüglich der Düse ist ein wichtiger Parameter im Hinblick auf ein gutes Startverhalten des Reformers. Bei Vorrichtungen des Standes der Technik wurde der Glühstift im Allgemeinen durch das Reformergehäuse gehalten, so dass sich hierdurch Positionierungsschwankungen bezüglich der Düse ergeben konnten. Durch die Eigenschaft der erfindungsgemäßen Düse, dass die Düse selbst Mittel zum Halten des Glühstifts aufweist, können derartige Toleranzen ausgeschlossen werden.

Der Glühstift hat stets dieselbe Position bezüglich der Düse.

In einer weiteren bevorzugten Ausführungsform der vorliegenden Erfindung ist vorgesehen, dass die Mittel zum Halten des Glühstifts als schräg zur Düsenachse verlaufende Bohrung realisiert sind. Der Glühstift muss dann zur geeigneten Positionierung lediglich in die Bohrung eingeführt werden. Ein Anschlag am Glühstift und/oder innerhalb der Bohrung sorgt dafür, dass der Glühstift bezüglich der Düse in seine optimale Position geführt wird.

Der Erfindung liegt die Erkenntnis zugrunde, dass durch einer aus Spiralkanal und Spaltraum zusammengesetzte Drallkammer eine besonders vorteilhafte Erhaltung des Dralls herbeigeführt werden kann. Dies hat zur Folge, dass das gasförmige Medium, das heißt insbesondere die Luft, mit geringer Geschwindigkeit in den Ringraum eingeleitet werden kann, in diesem beschleunigt werden kann und dann aus diesem mit hoher Geschwindigkeit in den Spaltraum eingeleitet werden kann. Auf diese Weise wird an dem Austritt des Spaltraums ein Unterdruck in der Weise bereitgestellt, dass das den Spaltraum durchsetzende flüssige Medium, das heißt insbesondere der Brennstoff, zerstäubt beziehungsweise vernebelt wird.

Die Erfindung wird mit Bezug auf die beigleitenden Zeichnungen anhand bevorzugter Ausführungsformen beispielhaft erläutert.

Es zeigen:
- Figur 1: ein schematisches Blockschaltbild eines Systems, bei dem die vorliegende Erfindung einsetzbar ist;
- Figur 2: einen Teil-Längsschnitt einer Ausführungsform einer Düse zur Verwendung in einem erfindungsgemäßen System und
- Figur 3: eine Querschnittsansicht des Ringraums der Drallkammer der Düse gemäß Figur 2.

Bei der nachfolgenden Beschreibung der Zeichnungen bezeichnen gleiche Bezugszeichen gleiche oder vergleichbare Komponenten.

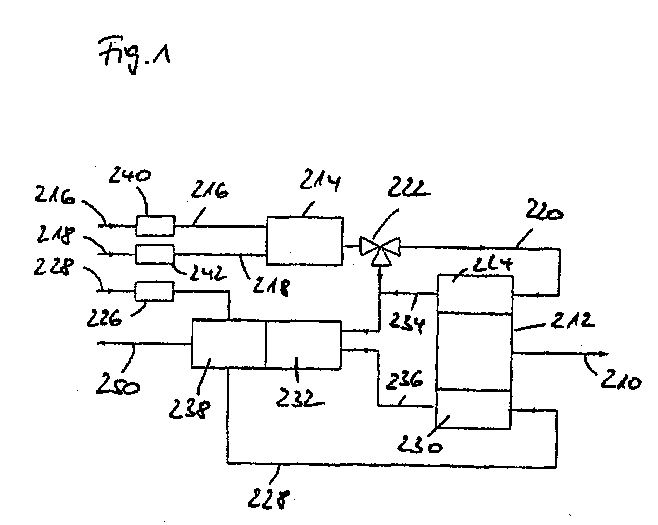

Figur 1 zeigt ein schematisches Blockschaltbild eines Systems, bei dem die vorliegende Erfindung einsetzbar ist. Über eine Pumpe 240 wird einem Reformer 214 Brennstoff 216 zugeführt. Dem Reformer 214 wird weiterhin über ein Gebläse 242 Luft 218 zugeführt. Das in dem Reformer 214 erzeugte Reformat 220 gelangt über eine Ventileinrichtung 222 zur Anode 224 einer Brennstoffzelle 212. Der Kathode 230 der Brennstoffzelle 212 wird über ein Gebläse 226 Kathodenzuluft 228 zugeführt. Die Brennstoffzelle 212 erzeugt elektrische Energie 210. Das Anodenabgas 234 und die Kathodenabluft 236 werden einem Brenner 232 zugeführt. Ebenfalls kann dem Brenner 232 über die Ventileinrichtung 222 Reformat zugeführt werden. Die in dem Brenner 232 erzeugte Wärmeenergie kann in einem Wärmetauscher 238 der Kathodenzuluft 228 zugeführt werden, so dass diese vorgewärmt wird. Aus dem Wärmetauscher 238 strömt Abgas 250 aus.

Das im Zusammenhang mit den nachfolgend beschriebenen Figuren dargestellte System kann verwendet werden, um dem Reformer 214 ein Brennstoff/Luft-Gemisch zuzuführen.

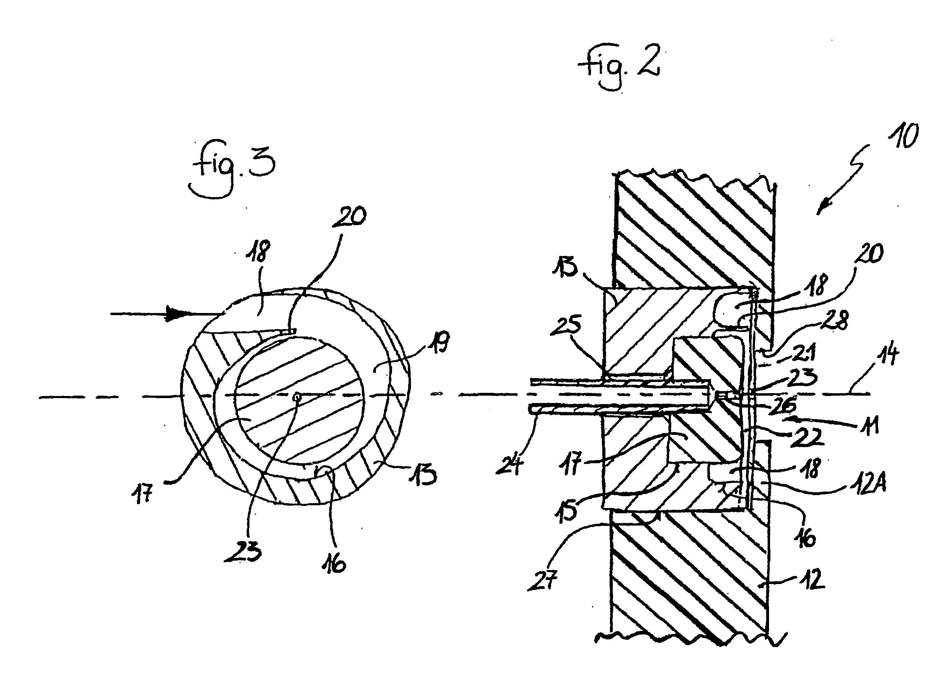

Die in Figur 2 allgemein mit der Bezugsziffer 10 bezeichnete Niederdruck-Zerstäubungsvorrichtung umfasst eine Zweistoffdüse 11, die in die Wandung 12 eines Reformers eingesetzt ist. Im Einzelnen besteht die Zweistoffdüse 11 aus einem massiven zylindrischen Grundkörper 13, der von der rückwärtigen Seite bündig in eine zylindrische Sackloch-Bohrung 27 der Wandung 12 eingesetzt ist. Das die Sacklochbohrung 27 begrenzende relativ dünnwandige Wand Teil 12A der Wandung 12 ist von einem zylindrischen Durchtritt 28 durchbrochen. Auf der in Figur 2 rechten Seite, die dem Austritt der Zweistoffdüse 11 in den Reformer entspricht, weist der Grundkörper 13 einer Ausnehmung 16 auf, die den äußeren Rand eines sich verengenden Spiralkanals 19 definiert.

Innerhalb des Spiralkanals 19 ist koaxial zum Grundkörper 13 eine eine größere axiale Erstreckung als der Spiralkanal 19 aufweisende zylindrische sacklochartige Ausnehmung 15 vorgesehen. In die Ausnehmung 15 ist mit enger Passung ein massives Zylinderteil 17 dicht eingesetzt, das von dieser in den Spiralkanal 19 axial hineinreichend vorsteht und dessen Innenkontur definiert. Der Spiralkanal 19 bildet einen Teil der Drallkammer der Zweistoffdüse 11. In ihn mündet tangential ein Eintrittskanal 18 für ein gasförmiges Medium. Der Eintrittskanal 18 geht kontinuierlich in den Spiralkanal 19 an dessen weitester Stelle über. Der Spiralkanal 19 endet mit seiner schmalsten Stelle nach ca. 360 Grad in Höhe des Eintrittskanals 18 innenliegend, wobei er von diesem durch eine Trennrippe 20 getrennt ist. Die Sacklochbohrung 27 ist am vorderen Ende (Düsenaustrittsende) nahezu vollständig durch eine Abschlussplatte 21 abgeschlossen und wird lediglich durch eine den Düsenaustritt 23 bildende zentrale Düsenbohrung unterbrochen. Die axiale Erstreckung des massiven Zylinderteils 17 ist so gewählt, dass zwischen der vorderen (in Figur 2 der rechten) Stirnseite des Zylinderteils 17 und der Abschlussplatte 21 ein Spaltraum 22 verbleibt, der aufgrund der Stirnseite des Zylinderteils 17 Kreisform besitzt und über seinen gesamten Umfang in den Spiralkanal 19 übergeht. Der Spiralkanal 19 und der Spaltraum 22 bilden gemeinsam die Drallkammer der Zweistoffdüse 11.

Die den Düsenaustritt 23 bildende Düsenbohrung ist fluchtend mit der Längsmittenachse 14 in der Abschlussplatte 21 gebildet.

Die Zweistoffdüse 11 umfasst außerdem eine Zufuhrleitung 24 für ein flüssiges Medium, insbesondere Brennstoff, in die eine zur Längsmittenachse 14 koaxial verlaufende Bohrung 25 des massiven Zylinderteils 17 durchsetzt und bündig in einer Verlängerung der Bohrung 25 aufgenommen ist. Diese ist ausgehend von der Rückseite in das Zylinderteil 17 eingebracht, und sie erstreckt sich etwa über die halbe axiale Länge des Zylinderteils 17. An diese Bohrung im Zylinderteil 17 schließt sich eine im Durchmesser kleinere Bohrung 26 an, die in den Spaltraum 22 einmündet. Die axiale Erstreckung des Spaltraums 22 ist im Hinblick auf einen möglichst geringen Druckverlust vergleichsweise klein.

Der Grundkörper 13 der Zweistoffdüse 11 kann zusätzlich eine schräg zur Längsmittenachse verlaufende (nicht dargestellte) Bohrung aufweisen. Zu diesem Zweck kann entweder der Grundkörper 13 einen größeren Durchmesser aufweisen als dargestellt, oder der Spiralkanal 19 kann mit weniger Platzbedarf angeordnet werden. Eine solche (nicht dargestellte) Bohrung kann dann einen (nicht dargestellten) Glühstift aufnehmen, so dass dann nahezu ohne Toleranz die Lage des (nicht dargestellten) Glühstifts bezüglich der Düsenbohrung 23 festgelegt sein kann.

Die Funktionsweise der Niederdruck-Zerstäubungsvorrichtung 10 ist wie folgt. Über den Eintrittskanal 18 wird gasförmiges Medium, insbesondere Luft, in den Spiralkanal 19 der Drallkammer eingespeist, über welchen diese Luft unter gleichmäßigen Druckverhältnissen in den Spaltraum 22 der Drallkammer gelangt. In den Spaltraum 22 wird über die Bohrung 26 flüssiges Medium, insbesondere Brennstoff eingespeist, und dieser Brennstoff wird aus dem gegenüberliegenden Düsenaustritt 23 durch das unter Druck stehende gasförmige Medium ausgetragen und hierbei in feine Tröpfchen zerissen.

Ist beispielsweise gewünscht, dass Brennstoff mit einem Durchsatz von 500 g/h eingeleitet wird, sind typische Abmessungen der Zweistoffdüse 11 wie folgt: Die Entfernung des Eintrittkanals 18 von der Längsmittenachse 14 beträgt etwa 8 mm, und der freie Querschnitt beträgt etwa 4 mm. Die axiale Erstreckung des Spaltraums 22 beträgt etwa 0,65 mm. Der Durchmesser der Dünndüsenaustritt 23 bildenden Düsenbohrung beträgt ca. 2 mm, und ihre Länge beträgt 0,05 mm bis 1 mm (maximale Länge ca. 0,5 mm bis 1 mm). Mit einer derart bemessenen Zweistoffdüse 11 beträgt der zur Zerstäubung des flüssigen Mediums erforderliche Mindestdruck 30 mbar.

### Bezugszeichenliste

- 10: Niederdruck-Zerstäubungsvorrichtung
- 11: Zweistoffdüse
- 12: Wandung
- 12A: Wandteil
- 13: Grundkörper
- 14: Längsmittenachse
- 15: Ausnehmung
- 16: Ausnehmung
- 17: Zylinderteil
- 18: Eintrittskanal
- 19: Spiralkanal
- 20: Trennrippe
- 21: Abschlussplatte
- 22: Spaltraum
- 23: Düsenbohrung
- 24: Zufuhrleitung
- 25: Bohrung
- 26: Bohrung
- 27: Sackloch-Bohrung
- 28: Durchtritt (in 12)
- 64: Glühstift
- 210: elektrische Leistung
- 212: Brennstoffzelle
- 214: Reformer
- 216: Brennstoff
- 218: Luft
- 220: Reformat
- 222: Ventileinrichtung
- 224: Anode
- 226: Gebläse
- 228: Kathodenzuluft
- 230: Kathode
- 232: Brenner
- 234: Anodenabgas
- 236: Kathodenabluft
- 238: Wärmetauscher
- 240: Pumpe
- 242: Gebläse
- 250: Abgas

## Patentansprüche

1. System zum Umsetzen von Brennstoff (216) und Luft (218) zu Reformat (220) mit
- einem Reformer (214), der einen Reaktionsraum aufweist,
- einer Düse (11) zum Zuführen eines Brennstoff/Luft-Gemisches zu dem Reaktionsraum,
- mindestens einer Zufuhrleitung (24) zum Zuführen von Brennstoff (216) in die Düse (11) und
- mindestens einem Eintrittskanal (18) zum Zuführen von Luft (218) in die Düse (11),
**dadurch gekennzeichnet,**
- **dass** die Düse (11) eine Drallkammer (19, 22) aufweist, in die die mindestens eine Zufuhrleitung (24) zum Zuführen von Brennstoff (216) im wesentlichen axial zentral und der mindestens eine Eintrittskanal (18) im wesentlichen tangential einmünden und aus der ein Düsenaustritt (23) ausmündet, und
- **dass** die Drallkammer (19, 22) einen sich verengenden Spiralkanal (19), in den der Eintrittskanal (18) für das gasförmige Medium mündet, und einen sich axial in Richtung zum Düsenaustritt (23) daran anschließenden Spaltraum (22) umfasst, in den die Zufuhrleitung (24) zum Zuführen von Brennstoff (216) einmündet und aus dem der Düsenaustritt (23) ausmündet.

2. System nach Anspruch 1, **dadurch gekennzeichnet, dass** eine Stirnwandung (Innenwandung oder Außenwandung) des Spiralkanals (19) kreiszylindrisch und die andere spiralförmig gebildet sind.

3. System nach Anspruch 1 oder 2, **dadurch gekennzeichnet, dass** der Eintrittskanal (26) für das flüssige Medium koaxial zum Düsenaustritt (23) angeordnet ist.

4. System nach einem der vorangehenden Ansprüche, **dadurch gekennzeichnet, dass** das flüssige Medium über eine mit der Längsmittenachse (14) der Drallkammer (19, 22) fluchtende Bohrung (25, 26) zentral in den Spaltraum eingespeist und auf der diese Bohrung (25, 26) direkt gegenüberliegenden Seite des Spaltraums (22) über eine weitere größere Bohrung (25, 26) ausgeleitet wird, die den Düsenaustritt (23) bildet.

5. System nach einem der Ansprüche 1 bis 3, **dadurch gekennzeichnet, dass** der Düsenaustritt (23) durch eine Düsenbohrung in einer Abschlussplatte (21) des Spaltraums (22) der Drallkammer (19, 22) festgelegt ist.

6. System nach Anspruch 4, **dadurch gekennzeichnet, dass** der Rand des Düsenaustritts (23) auf Seiten des Spaltraums (22) der Drallkammer (19, 22) verrundet, angeschrägt oder scharfkantig gebildet ist.

7. System nach Anspruch 4 oder 5, **dadurch gekennzeichnet, dass** die axiale Länge des Düsenaustritts (23) 0,050 mm bis 1 mm, insbesondere 0,1 mm bis 0,5 mm beträgt.

8. System nach einem der vorhergehenden Ansprüche, **dadurch gekennzeichnet, dass** Mittel vorgesehen sind, so dass in den Reaktionsraum Sekundärluft einströmen kann.

9. System nach einem der vorhergehenden Ansprüche, **dadurch gekennzeichnet, dass** die Düse (11) Mittel zum Halten eines Glühstifts (64) aufweist.

10. System nach Anspruch 9, **dadurch gekennzeichnet, dass** die Mittel zum Halten des Glühstifts (64) als schräg zur Düsenachse verlaufende Bohrung (25, 26) realisiert sind.

## Claims

1. System for reacting fuel (216) and air (218) to form reformate (220), comprising:
- a reformer (214), which has a reaction chamber,
- a nozzle (11) for feeding a fuel/air mixture to the reaction chamber,
- at least one feed line (24) for feeding fuel (216) into the nozzle (11) and
- at least one inlet duct (18) for feeding air (218) into the nozzle (11),
**characterized**
- **in that** the nozzle (11) has a swirl chamber (19, 22), into which the at least one feed line (24) for feeding fuel (216) opens substantially axially centrally and the at least one inlet duct (18) opens substantially tangentially, and from which a nozzle outlet (23) leaves, and
- **in that** the swirl chamber (19, 22) comprises a narrowing spiral duct (19), into which the inlet duct (18) for the gaseous medium opens, and a space (22) axially adjacent thereto in the direction of the nozzle outlet (23), into which the feed line (24) for feeding fuel (216) opens and from which the nozzle outlet (23) leaves.

2. System according to Claim 1, **characterized in that** an end wall (inner wall or outer wall) of the spiral duct (19) is circularly cylindrical and the others are formed spirally.

3. System according to Claim 1 or 2, **characterized in that** the inlet duct (26) for the liquid medium is arranged coaxially with respect to the nozzle outlet (23).

4. System according to one of the preceding claims, **characterized in that** the liquid medium is fed centrally into the space via a bore (25, 26) aligned with the central longitudinal axis (14) of the swirl chamber (19, 22), and is led out on the side of the space (22) lying directly opposite this bore (25, 26) via a further, larger bore (25, 26), which forms the nozzle outlet (23).

5. System according to one of Claims 1 to 3, **characterized in that** the nozzle outlet (23) is defined by a nozzle bore in an end plate (21) of the space (22) of the swirl chamber (19, 22).

6. System according to Claim 4, **characterized in that** the rim of the nozzle outlet (23) is rounded, bevelled or sharp-edged on the side of the space (22) of the swirl chamber (19, 22).

7. System according to Claim 4 or 5, **characterized in that** the axial length of the nozzle outlet (23) is 0.050 mm to 1 mm, in particular 0.1 mm to 0.5 mm.

8. System according to one of the preceding claims, **characterized in that** means are provided so that secondary air can flow into the reaction chamber.

9. System according to one of the preceding claims, **characterized in that** the nozzle (11) has means for holding a glow plug (64).

10. System according to Claim 9, **characterized in that** the means for holding the glow plug (64) are implemented as a bore (25, 26) running obliquely with respect to the nozzle axis.

## Revendications

1. Système destiné à convertir du combustible (216) et de l'air (218) en réformat (220), comprenant
- un reformeur (214), qui comprend une chambre de réaction,
- une buse (11) destinée à amener un mélange combustible/air à la chambre de réaction,
- au moins une conduite d'alimentation (24) destinée à amener le combustible (216) dans la buse (11) et
- au moins un canal d'entrée (18) destiné à amener de l'air (218) dans la buse (11),
**caractérisé en ce que**
- la buse (11) comprend une chambre de turbulence (19, 22), dans laquelle la au moins une conduite d'alimentation (24) destinée à amener du combustible (216) débouche au centre de manière essentiellement axiale et le au moins un canal d'entrée (18) débouche de manière essentiellement tangentielle, et de laquelle sort une sortie de buse (23), et
- **en ce que** la chambre de turbulence (19, 22) est formée par un canal en spirale (19) se rétrécissant, dans lequel débouche le canal d'entrée (18) pour le milieu gazeux, et par un interstice (22) qui s'y raccorde dans le sens axial en direction de la sortie de buse (23), interstice dans lequel débouche la conduite d'alimentation (24) destinée à amener du combustible (26) et d'où sort la sortie de buse (23).

2. Système selon la revendication 1, **caractérisé en ce qu'**une paroi frontale (paroi interne ou paroi externe) du canal en spirale (19) est en forme de manière cylindre circulaire et l'autre en forme de spirale.

3. Système selon la revendication 1 ou 2, **caractérisé en ce que** le canal d'entrée (26) pour le milieu liquide est disposé de manière coaxiale à la sortie de buse (23).

4. Système selon l'une quelconque des revendications précédentes, **caractérisé en ce que** le milieu liquide est introduit de manière centrale dans l'interstice par un alésage (25, 26) aligné sur l'axe longitudinal central (14) de la chambre de turbulence (19, 22) et évacué sur la face de l'interstice (22) directement opposée à cet alésage (25, 26) par un autre alésage (25, 26) plus grand, qui forme la sortie de buse (23).

5. Système selon l'une quelconque des revendications 1 à 3, **caractérisé en ce que** la sortie de buse (23) est déterminée par un alésage de buse dans une plaque d'obturation (21) de l'interstice (22) de la chambre de turbulence (19, 22).

6. Système selon la revendication 4, **caractérisé en ce que** le bord de la sortie de buse (23) est formé de façon arrondie, inclinée ou à arête vive sur les faces de l'interstice (22) de la chambre de turbulence (19, 22).

7. Système selon la revendication 4 ou 5, **caractérisé en ce que** la longueur axiale de la sortie de buse (23) est de 0,050 mm à 1 mm, en particulier de 0,1 mm à 0,5 mm.

8. Système selon l'une quelconque des revendications précédentes, **caractérisé en ce que** des moyens sont prévus, de sorte que de l'air secondaire peut s'écouler dans la chambre de réaction.

9. Système selon l'une quelconque des revendications précédentes, **caractérisé en ce que** la buse (11) comprenant des moyens destinés à supporter un crayon de préchauffage (64).

10. Système selon la revendication 9, **caractérisé en ce que** les moyens destinés à supporter le crayon de préchauffage (64) sont réalisés sous forme d'un alésage (25, 26) s'étendant de manière oblique par rapport à l'axe de buse.
